# EUROPEAN PATENT SPECIFICATION

(11) **EP 2 100 805 B1**
(45) Date of publication and mention of the grant of the patent: **21.08.2013**
(21) Application number: 08425156.0
(22) Date of filing: 12.03.2008
(51) Int. Cl.: B62K 21/26, B62K 23/02

(54) **Cover sheath for a grippable bicycle component and grippable component equipped with such a sheath**
Schutzhülle für eine greifbare Fahrradkomponente und greifbare Komponente mit einer derartigen Hülle
Gaine de protection pour un composant de bicyclette antidérapant et composant de poignée équipé d'une telle gaine

(43) Date of publication of application: 16.09.2009
(73) Proprietor: Campagnolo S.r.l., 36100 Vicenza (VI) (IT)
(72) Inventor: de Pretto, Andrea, 36013 Piovene Rocchette (Vicenza) (IT)
(74) Representative: Riccardi, Elisa

(56) References cited:
- EP-A- 0 759 393
- EP-A- 0 893 335
- EP-A- 1 473 217
- CH-A- 271 547
- DE-U1-202005 017 905
- FR-A- 556 110
- FR-A- 804 757
- FR-A- 832 882
- FR-A- 1 084 990
- GB-A- 190 919 105
- JP-A- 11 029 084
- US-A- 2 618 986
- US-A- 3 016 763
- US-A- 5 564 316
- US-A- 5 570 896
- US-A- 5 802 927

## Description

The present invention concerns a cover sheath for a grippable bicycle component and a grippable bicycle component equipped with such a sheath.

More specifically, the grippable bicycle component can be a control device of a brake and/or of a derailleur, a portion of the handlebars, a grippable projection that can be mounted on curved handlebars as an auxiliary grip therefor, and also a single actuation lever of an on-board device of the bicycle such as for example an actuation lever of the brake or an actuation lever of a derailleur of the bicycle.

In the specific case of bicycles with curved handlebars, typically racing bicycles, the control devices have a support body of the levers or buttons for actuating the brake and/or the derailleur, that is configured such as to be grippable. In this way, the two left and right control devices in practice form two extensions of the handlebars, by gripping which the cyclist can ride the bicycle, as an alternative to handlebars gripping.

The extended gripping by the cyclist of a grippable bicycle component, in particular during competitions, can create situations of discomfort for the contact areas of the hand subjected to greater pressure, to the point of injuring the hand bones or causing skin micro-abrasions.

In order to avoid this, EP1473217A1 describes a cover sheath for a bicycle component intended to be gripped or held when in use on the bicycle, comprising at least one area with differentiated compliance and more specifically greater compliance that offers greater comfort for the cyclist's hands, particularly in the contact areas where they exert greater pressure such as the palm of the hand and/or the portion defined between thumb and forefinger. In an embodiment, each area with greater compliance is made through an insert having, on the inner side of the sheath, lightening grooves that also contribute to define reduced thickness, more compliant wall portions.

EP 0 893 335 A2 and CH 271 547 Ashow sheaths for covering the ends of handlebars, comprising, on an inner side thereof, a plurality of inner recesses defining a plurality of inner projections, and on an outer side thereof, a plurality of outer projections. The preamble of claim 1 is based on document US 26 18 986.

The technical problem at the basis of the present invention is to further improve the cyclist's comfort.

In a first aspect thereof, the present invention concerns a cover sheath for a grippable bicycle component as claimed in claim 1.

In the present description and in the attached claims, under "inner side" the side of the sheath intended to face towards the grippable component is meant, and under "outer side" the opposite one is meant.

The air captured between the sheath and the grippable component in the inner recesses acts as a cushion, increasing the compliance of the sheath. The recesses on the outer side, beside also increasing the compliance of the sheath, increase the grip on the sheath and promote aeration.

Preferably, each outer recess is at an inner projection.

By arranging the outer recesses at the inner projections the degree of change in the thickness of the sheath is reduced, which further improves the cyclist's comfort.

More preferably, said curvilinear directions of the first plurality of projections are substantially parallel to each other.

In the present description and in the attached claims, under "substantially parallel directions" it is meant that there are portions of non-infinitesimal length in which the directions are parallel.

Preferably, moreover, said curvilinear directions of the first plurality of projections follow a corresponding curvature of the bicycle component.

More preferably, said curvilinear directions of the second plurality of projections are substantially parallel to each other.

Preferably, moreover, said curvilinear directions of the second plurality of projections follow a corresponding curvature of the bicycle component.

Even more preferably, said curvilinear directions of the second plurality of projections are substantially perpendicular to the curvilinear directions of the first plurality of projections.

In the present description and in the attached claims, under "substantially perpendicular directions" it is meant that the directions form an angle close to 90° at the intersections.

Said plurality of outer recesses can comprise a plurality of substantially spherical-cap-shaped notches.

Said notches are preferably arranged in a substantially regular two-dimensional array.

In the present description and in the attached claims, under "in a substantially regular two-dimensional array" it is meant to indicate at substantially equal mutual distances along two substantially perpendicular directions.

When said plurality of inner projections comprises said first and said second plurality of projections, each notch is preferably at an intersection between a projection of the first plurality of projections and a projection of the second plurality of projections.

Alternatively, said plurality of outer recesses can comprise a first plurality of grooves extending according to spaced and non-intersecting curvilinear directions.

More preferably, said curvilinear directions of the first plurality of grooves are substantially parallel to each other.

Preferably, moreover, said curvilinear directions of the first plurality of grooves follow a corresponding curvature of the bicycle component.

Said plurality of outer recesses can further comprise a second plurality of grooves extending according to spaced and non-intersecting curvilinear directions, the grooves of the second plurality intersecting with the grooves of the first plurality.

More preferably, said curvilinear directions of the second plurality of grooves are substantially parallel to each other.

Preferably, moreover, said curvilinear directions of the second plurality of grooves follow a corresponding curvature of the bicycle component.

Even more preferably, said curvilinear directions of the second plurality of grooves are substantially perpendicular to the curvilinear directions of the first plurality of grooves.

Preferably, said sheath is made of an elastomeric material.

More preferably said elastomeric material has a Shore A hardness 40-80, more preferably a Shore A hardness 50-70.

Even more preferably, said material is a silicon with Shore A hardness 60.

Preferably, said at least one area extends in a region of the sheath intended to make contact with the cyclist's hand in the gripped condition of the grippable component.

More preferably, said at least one area extends in a region of the sheath intended to make contact with a region of the cyclist's hand selected from the group consisting of the region defined between the thumb and the forefinger, the palm region, the region of the thumb or of an end thereof, and the region of the fingers other than the thumb or of their ends.

Preferably said sheath is a cover sheath of a control device of a brake and/or of a derailleur, even more preferably of such a device that can be associated with curved bicycle handlebars.

Alternatively, the sheath can be a cover sheath of a portion of the handlebars, a grippable projection that can be mounted on curved handlebars as an auxiliary grip thereof, as well as a single actuation lever of an on-board device of the bicycle such as for example an actuation lever of the brake or an actuation lever of a derailleur of the bicycle.

In a second aspect thereof, the invention concerns a grippable bicycle component equipped with a sheath as described above.

Further features and advantages of the invention shall become clearer from the description of some preferred embodiments thereof, made with reference to the attached drawings, wherein:
- figures 1A and 1B are side and perspective views, respectively, of a cover sheath for a control device of a bicycle, according to a first embodiment of the invention, in the assembled state;
- figures 2A and 2B are side and perspective views, respectively, of a cover sheath for a control device of a bicycle, according to a second embodiment of the invention, in the assembled state;
- figures 3A and 3B are side and perspective views, respectively, of a cover sheath for a control device of a bicycle, according to a third embodiment of the invention, in the assembled state;
- figures 4A and 4B are side and perspective views, respectively, of a cover sheath for a control device of a bicycle, according to a fourth embodiment of the invention, in the assembled state;
- figure 5 is a view from the inside, partially in section, of a cover sheath for a control device of a bicycle, in particular according to the embodiment of figures 4A, 4B;
- figures 6A and 6B are views according to different perspectives that schematise the material of the sheath of figures 1A and 1B;
- figures 7A and 7B are views according to different perspectives that schematise the material of the sheaths of figures 2A, 2B and 3A, 3B;
- figures 8A and 8B are views according to different perspectives that schematise the material of the sheath of figures 4A, 4B; and
- figure 9 is a sectional view of a cover sheath for a control device of a bicycle according to the invention, in particular according to one of the embodiments of figures 2A, 2B and 3A, 3B.

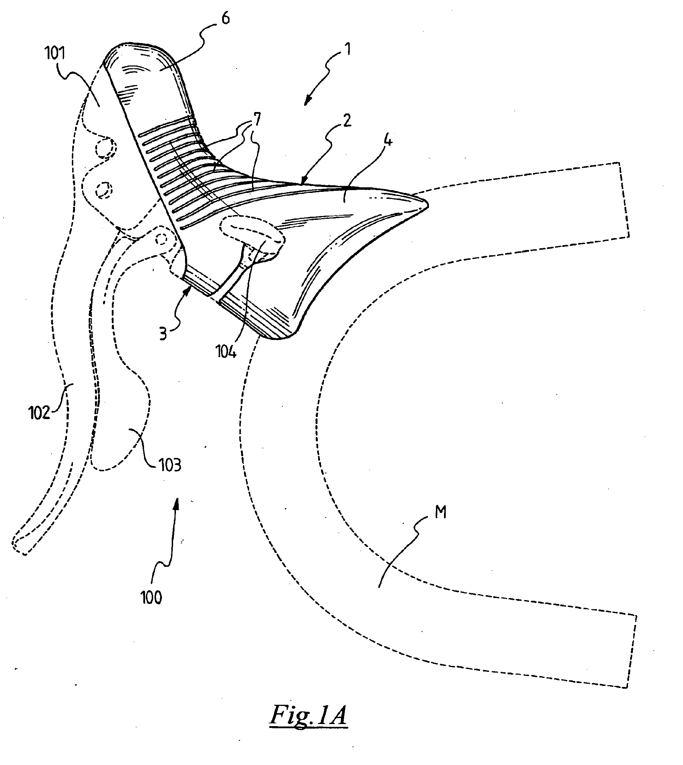

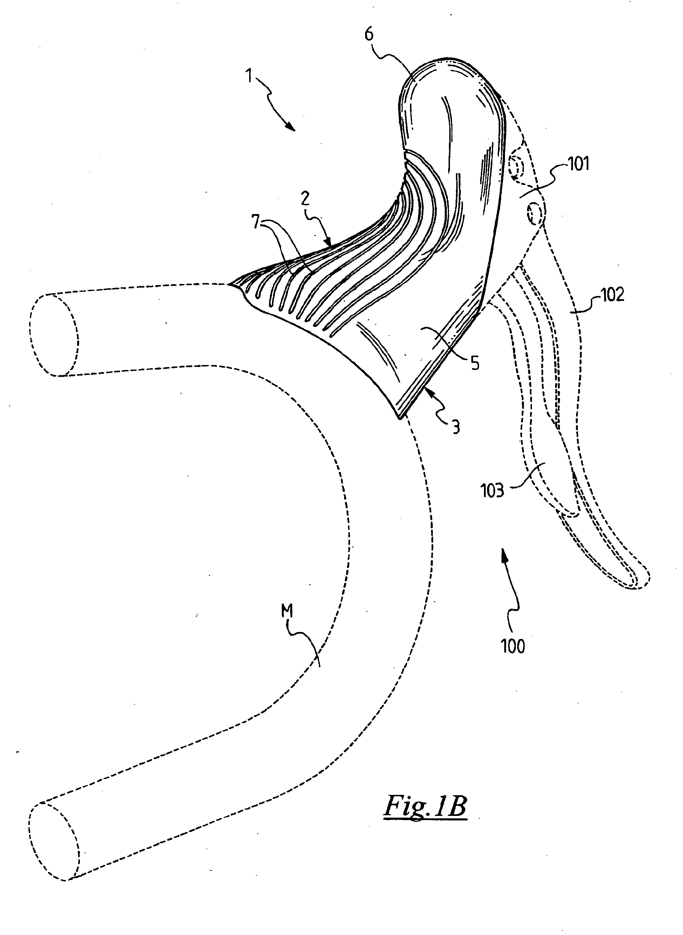

Figures 1A and 1B illustrate an integrated control device 100 of a brake and of a bicycle derailleur, in the right-hand version, i.e. to be mounted on the right end of curved handlebars M, typical of racing bicycles.

The device 100 comprises a support body 101 configured for attachment to the curved region of the handlebars M, an actuation lever 102 of the brake supported in an articulated manner on the support body 101, and two actuation members of the derailleur in the two opposite directions, in particular a lever 103 positioned behind the brake actuation lever 102 and a further lever 104 positioned on the side facing towards the centre of the handlebars M.

The particular configuration of the control device 100 is not relevant for the purposes of the invention, which applies for example to non-integrated control devices, i.e. wherein there is just the brake lever 102, and to devices in which the control of the derailleur, of the electronic type, takes place through buttons.

A grip portion of the control device 100 is coated with a cover sheath 1 according to the present invention.

The cover sheath 1 has a generally tubular configuration, with a top wall 2, a bottom wall 3, a proximal wall 4 facing towards the centre of the handlebars M, and a distal wall 5 facing away from the centre of the handlebars M.

The control device 100 is gripped by the cyclist resting the palm of the hand on the top wall 2 of the sheath 1, with the thumb resting on the proximal wall 4 of the sheath 1 and the four fingers other than the thumb resting on the distal wall 5 and on the bottom wall 3 of the sheath 1.

The control device 100 can also be gripped by the cyclist resting the palm of the hand in a position farther forward on the top wall 2 of the sheath 1, with the finger closed around a projection of the support body, equally coated by a region 6 of the sheath 1.

The cover sheath 1 could also lack the aforementioned bottom wall 3.

The cover sheath 1 is made of an elastomeric material, preferably with Shore A hardness 40-80, more preferably with Shore A hardness 50-70. Even more preferably, the cover sheath 1 is made of a silicon with a Shore A hardness 60.

The cover sheath 1, on an area of its outer side visible in figures 1A, 1B, has a plurality of outer recesses or grooves 7.

The grooves 7 extend according to curvilinear directions, which follow the curvature of the support body 101 of the control device 100.

The grooves 7 do not intersect each other, on the contrary are practically constantly spaced in the portions of equal curvature of the support body 101 of the control device 100.

More specifically, at the centre of the top wall 2 of the sheath 1, the grooves 7 extend parallel to each other a certain distance apart, in the direction from the handlebars M to the brake lever 102; at the end of the sheath 1 adjacent to the handlebars M the grooves 7 extend a shorter mutual distance, while still being locally substantially parallel; at the base of the region 6 of the sheath intended to coat the projection of the control device 100, namely where the cyclist rests the region between the thumb and the forefinger of the hand, the grooves 7 curve towards the proximal wall 4; along the proximal wall 4 the grooves 7 extend, again substantially parallel to each other, in the oblique direction taken up by the cyclist's thumb.

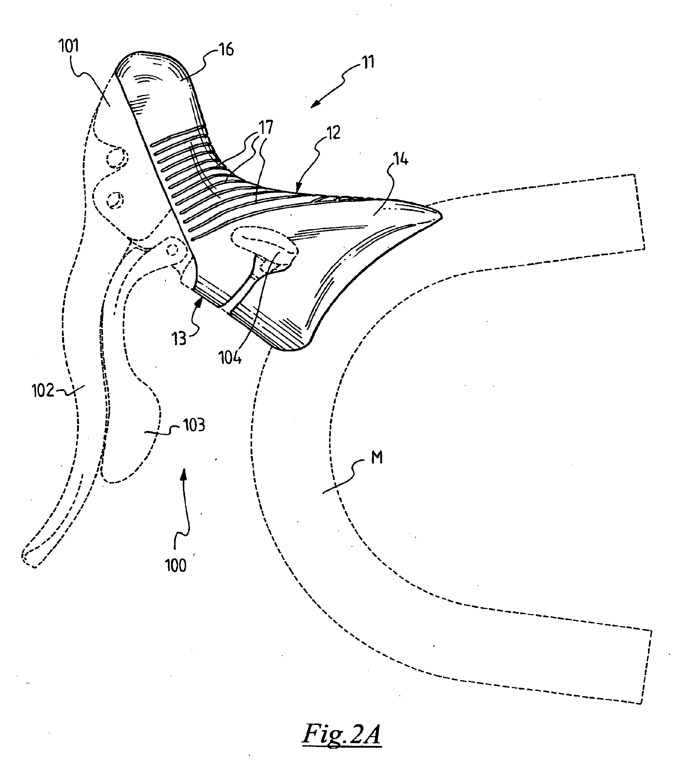

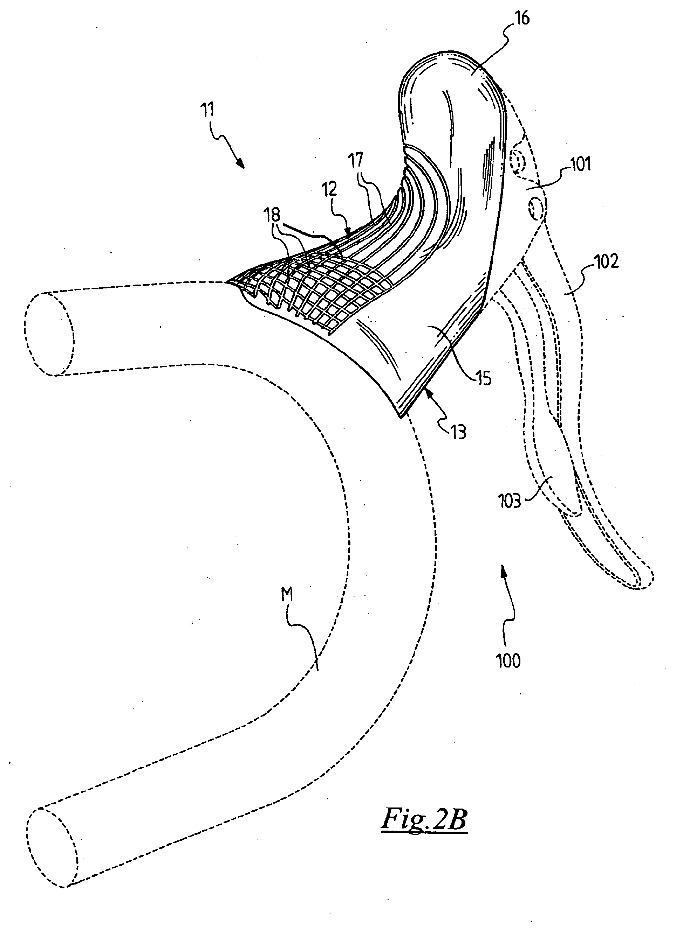

In the embodiment of figures 2A and 2B, the cover sheath 11, on its outer side, has a plurality of outer recesses or grooves 17 corresponding to the embodiment of figures 1A and 1B.

In a backward area of the top wall 12 towards the handlebars M, intended for the palm of the cyclist's hand to rest, the sheath 11 has a second plurality of outer recesses or grooves 18.

The grooves 18 extend substantially perpendicular to the grooves 17.

The grooves 18 also extend according to curvilinear directions, which follow the curvature of the support body 101 of the control device 100.

Moreover, the grooves 18 also do not intersect each other, on the contrary they are practically constantly spaced in the portions of equal curvature of the support body 101 of the control device 100.

Otherwise, the cover sheath 11 does not differ from the cover sheath 1; the elements of the cover sheath 11 corresponding to those of the cover sheath 1 have been indicated with the same reference numerals increased by 10.

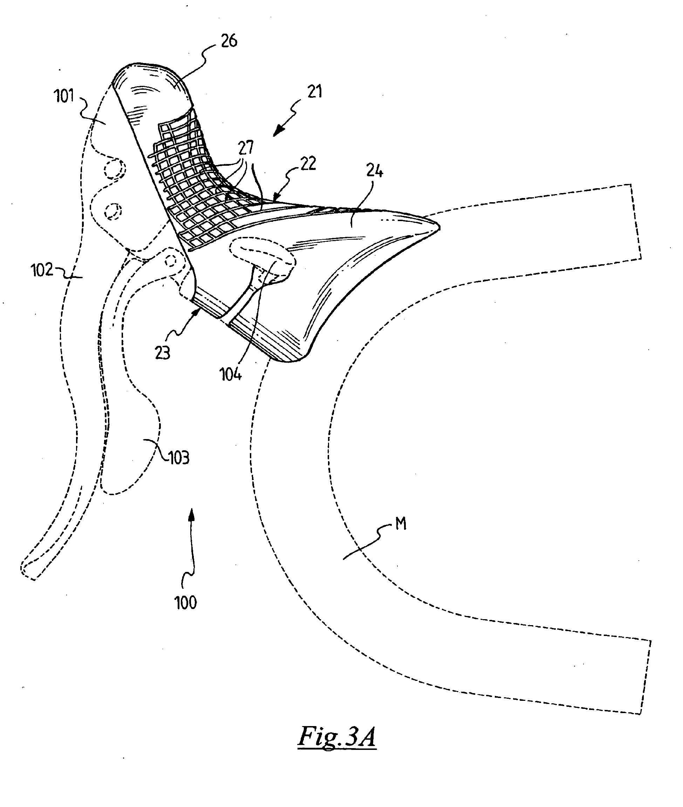

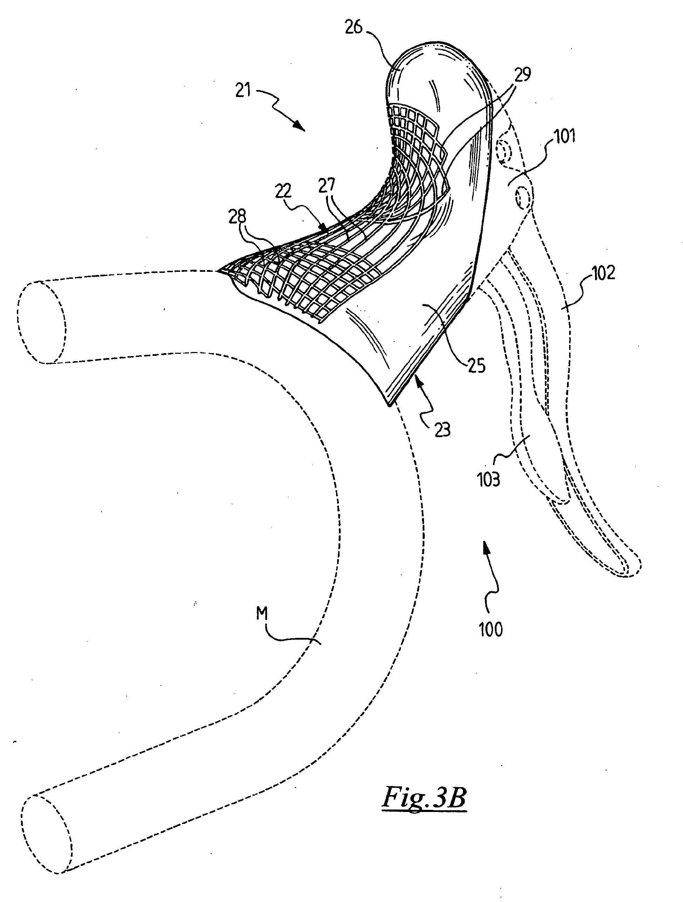

In the embodiment of figures 3A and 3B, the cover sheath 21, on its outer side, has a first plurality of outer recesses or grooves 27 and a second plurality of outer recesses or grooves 28, corresponding to the grooves 17, 18 of the embodiment of figures 2A and 2B.

Moreover, also at the base of the region 26 of the sheath 21 intended to coat the projection of the control device 100, namely where the cyclist rests the region located between the thumb and the forefinger of the hand, as well as in the area of the proximal wall 24 intended for the thumb to rest, there is a second plurality of outer recesses or grooves 29.

The grooves 29 also extend substantially perpendicular to the grooves 27, according to curvilinear directions, which follow the curvature of the support body 101 of the control device 100, and do not intersect with each other, on the contrary they are practically constantly spaced in the portions of equal curvature of the support body 101 of the control device 100.

Otherwise, the cover sheath 21 does not differ from the cover sheath 11; the elements of the cover sheath 21 corresponding to those of the cover sheath 11 have been indicated with the same reference numerals increased by 10.

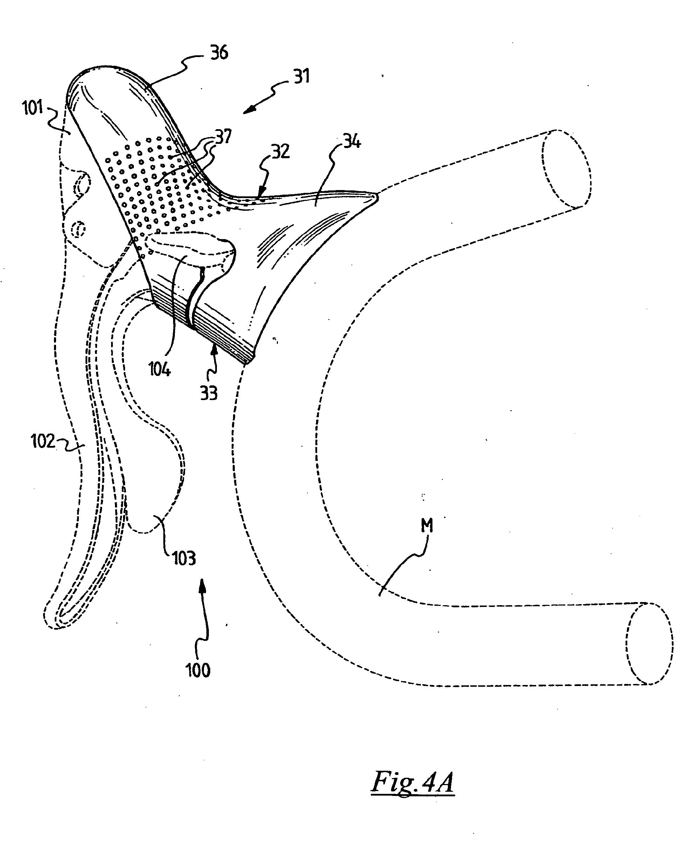

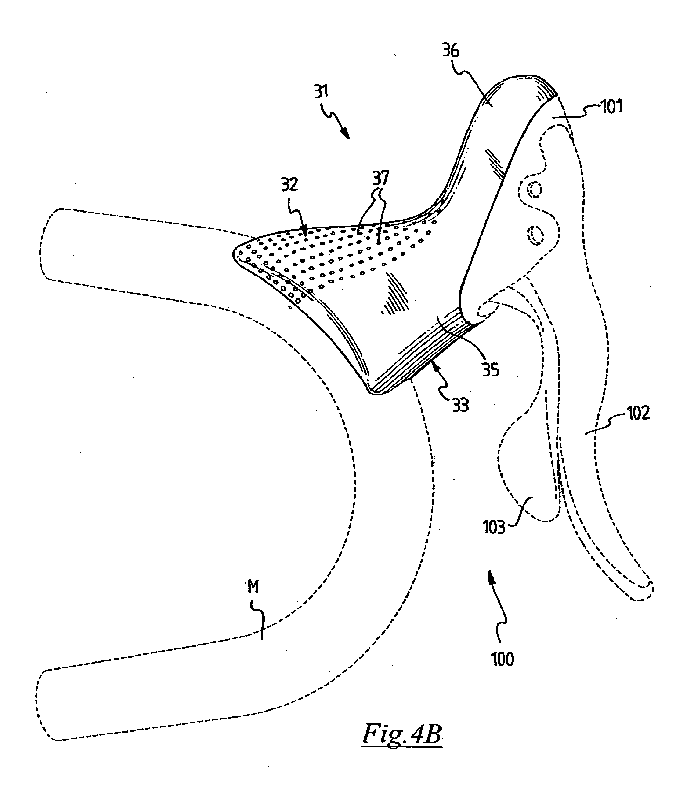

In the embodiment of figures 4A and 4B, the cover sheath 31, on its outer side, has a plurality of outer recesses in the form of substantially hemispherical notches 37.

The notches 37 are arranged in a substantially regular two-dimensional array, namely at substantially equal mutual distances along two substantially perpendicular directions.

Also in this embodiment, the notches 37 are arranged in an area of the top surface 32 and of the proximal surface 34 intended for the palm of the hand, of the region between the thumb and the forefinger and of the length of the cyclist's thumb to rest.

The elements of the cover sheath 31 corresponding to those of the cover sheath 21 have been indicated with the same reference numerals increased by 10.

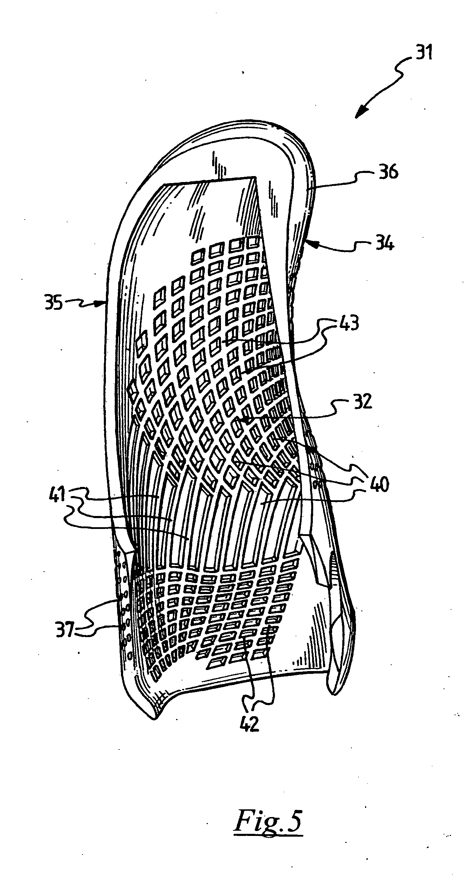

Figure 5 is a view from the inside of a cover sheath for a control device of a bicycle like those described above, although in the specific case it is the sheath 31 of figures 4A, 4B.

In the view of figure 5 the bottom surface 33 of the sheath 31 has been removed.

The cover sheath 31, on an area of its inner side, has a plurality of inner recesses 40 defining a plurality of inner projections 41, 42, 43.

A first plurality of inner projections 41 have the same progression as the grooves 7, 17, 27 of the sheaths 1, 11, 21 of figures 1A, 1B; 2A, 2B; 3A, 3B.

Thus, the inner projections 41 extend according to curvilinear directions, which follow the curvature of the support body 101 of the control device 100.

Moreover, the inner projections 41 do not intersect with each other, on the contrary they are practically constantly spaced in the portions of equal curvature of the support body 101 of the control device 100.

More specifically, at the centre of the upper wall 32 of the sheath 31, the inner projections 41 extend parallel to each other a certain distance apart, in the direction from the handlebars M to the brake lever 102; at the end of the sheath 31 adjacent to the handlebars M the inner projections 41 extend a shorter distance apart, while still being locally substantially parallel; at the base of the region 36 of the sheath intended to coat the projection of the control device 100, the inner projections 41 curve towards the proximal wall 34; along the proximal wall 34 the inner projections 41 extend, again substantially parallel to each other, in the oblique direction taken up by the cyclist's thumb.

Moreover, a second plurality of inner projections 42 have the same progression as the grooves 18, 28 of the sheaths 11, 21 of figures 2A, 2B and 3A, 3B.

Thus, the inner projections 42 extend in a backward area of the inner side of the top wall 32 of the sheath 31 towards the handlebars M, substantially perpendicular to the inner projections 41.

The inner projections 42 also extend according to curvilinear directions, which follow the curvature of the support body 101 of the control device 100.

Moreover, the inner projections 42 also do not intersect with each other, on the contrary they are practically constantly spaced in the portions of equal curvature of the support body 101 of the control device 100.

Furthermore, also at the base of the region 36 of the sheath 31 intended to coat the projection of the control device 100, as well as in the area of the proximal wall 34, there is a second plurality of inner projections 43, having the same progression as the grooves 29 of the sheath 21 of figures 3A, 3B.

Thus, the inner projections 43 also extend substantially perpendicular to the inner projections 41, according to curvilinear directions, which follow the curvature of the support body 101 of the control device 100, and do not intersect with each other, on the contrary are practically constantly spaced in the portions of equal curvature of the support body 101 of the control device 100.

As stated, the area in the sheath 1, 21, 31, 41 where the outer recesses 7; 17, 18; 27-29; 37 are formed corresponds to the area where the inner projections 41-43 are formed.

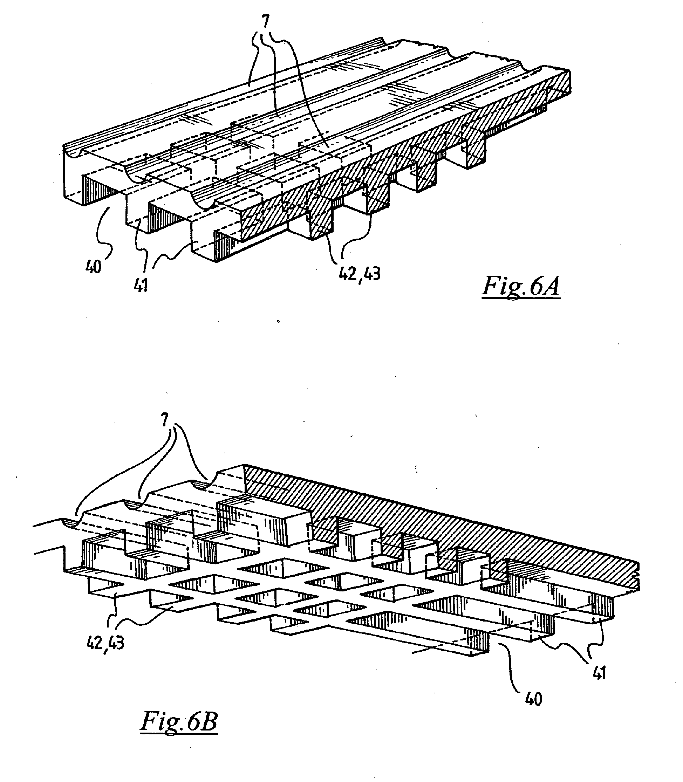

Preferably, such correspondence is even stricter. Indeed, as figures 6A and 6B schematically illustrate, in the sheath 1 according to figures 1A and 1B the outer recesses or grooves 7 are each located at an inner projection 41. It should be noted that in such figures, the material of the sheath 1 is schematically represented as flat and the grooves 7 and the inner projections 41; 42-43 are schematically shown as extending perfectly parallel and perpendicular, respectively. As stated above, in the sheath 1, the grooves 7 and the inner projections 41; 42-43 on the other hand follow the curvature of the control device 100, therefore departing from such an "ideal" progression.

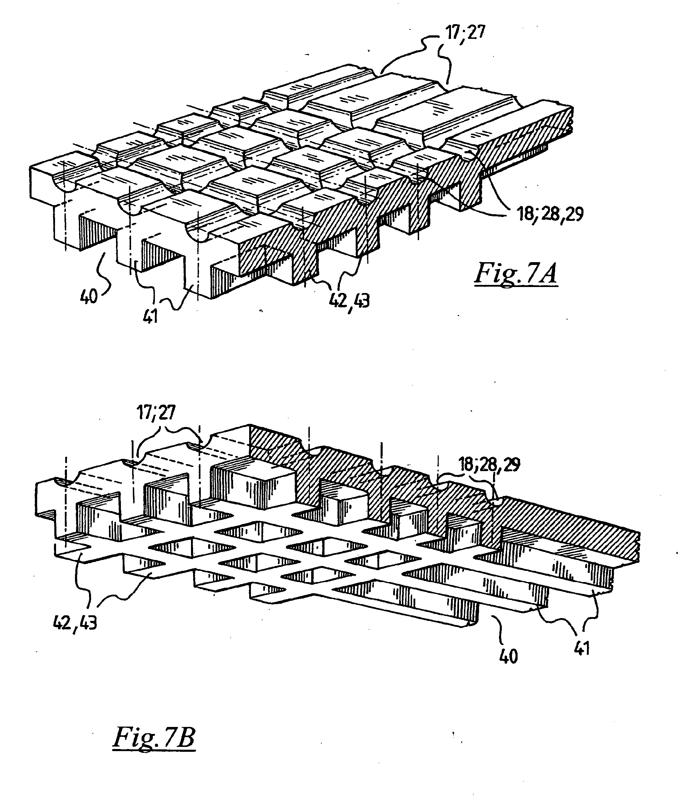

Similarly, as figures 7A and 7B illustrate with the same schematisations, in the sheaths 11, 21 according to figures 2A, 2B and 3A, 3B, the outer recesses or grooves 17; 27 of the first plurality and the outer recesses or grooves 18; 28-29 of the second plurality, respectively, are each located at an inner projection 41, 42-43, respectively.

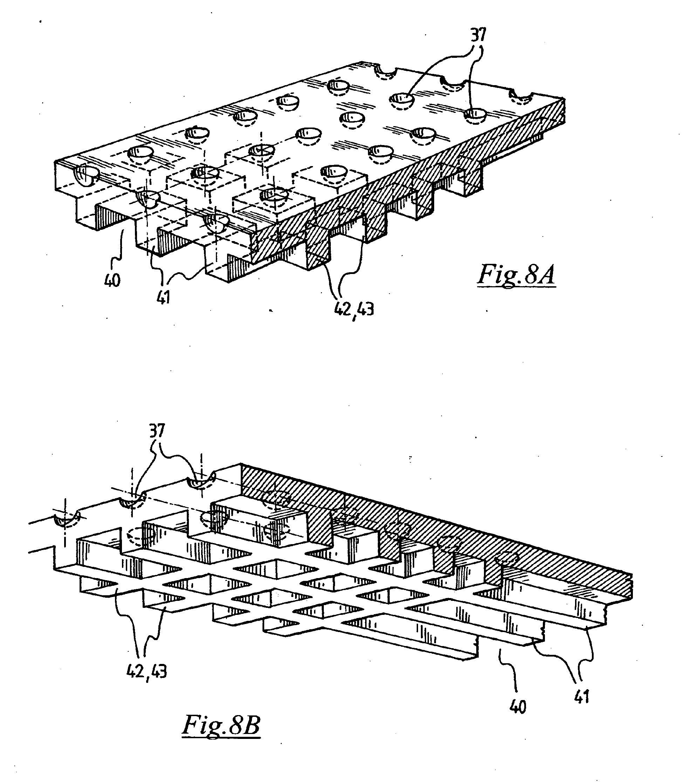

Furthermore, as figures 8A and 8B illustrate with the same schematisations, in the sheath 31 according to figures 4A, 4B, the outer recesses or notches 37 are each located at an inner projection 41, 42-43.

More specifically, each notch 37 on the outer side is at an intersection between a projection 41 of the first plurality of projections and a projection 42 or 43 of the second plurality of projections on the inner side.

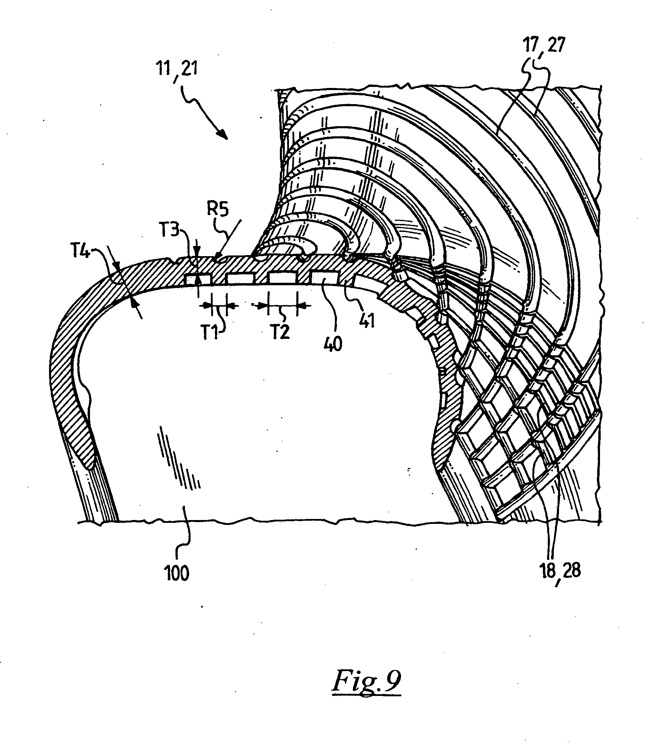

Finally, figure 9 illustrates a sectional view of a cover sheath for a control device 100, in particular a sectional view of one of the sheaths 11, 21 according to one of the embodiments of figures 2A, 2B and 3A, 3B.

Such a figure better illustrates what has been stated above, that the outer recesses 17, 27; 18, 28 depart from perfectly parallel and perpendicular progressions to follow the curvature of the control device 100.

The inner projections 41 (and 42, 43 though not shown) have a thickness, indicated with T1, preferably of about 0.9 mm.

The inner recesses 40 have a thickness indicated with T2 and preferably of about 2 mm, and such a depth as to leave a thickness T3 of material preferably of about 1.2 mm. The recesses 17, 27 on the outer side (and 18, 28 though not shown) have a substantially cylindrical shape with a radius of curvature, and therefore a maximum depth, indicated with R4, preferably of about 0.5 mm.

Figure 9 also illustrates that, in the rest of the sheath 11, 21, the thickness T4 of the sheath is preferably substantially uniform and preferably of about 2.3 mm. More specifically, the rest of the sheath 11, 21 extends on the outer side flush with the lands between the outer recesses 17, 27; 18, 28, and on the inner side flush with the free ends of the inner projections 41 (and 42, 43 though not shown).

In the various embodiments, the air captured between the sheath 1, 21, 31, 41 and the support body 101 of the control device 100 in the inner recesses 40 acts as a cushion, increasing the compliance of the sheath 1, 21, 31, 41 in the areas where there are such inner recesses 40.

More specifically, in the areas where there are just the inner projections 41 the compliance shall be greater than the areas where there are also the inner projections 42 or 43.

The recesses 7; 17, 18; 27-29; 37 on the outer side, besides also increasing the compliance of the sheath 1, 21, 31, 41, increase the grip on the sheath 1, 21, 31, 41 and promote aeration.

Finally, by arranging the outer recesses 7; 17, 18; 27-29; 37 at the inner projections 41-43 the degree of change in the thickness of the sheath 1, 21, 31, 41 is reduced, which further improves the cyclist's comfort.

Indeed, the thickness of the sheath varies between T4, T3 and the difference T4-T3, in other words between 1.2 mm, 1.8 mm and 2.3 mm with the preferred values indicated above. If, on the other hand, the outer recesses 7; 17, 18; 27-29; 37 were not arranged at the inner projections 41-43, rather at the inner recesses 40, the thickness of the sheath would vary between T4 and the difference T3-R5, in other words between 0.7 mm and 2.3 mm with the preferred values indicated above.

The various types of outer recesses and inner projections described above can be variously combined, with respect to what has been shown and described, in various areas of a cover sheath of a control device 100 for curved bicycle handlebars, to which it is desired to give greater compliance.

A cover sheath for a left hand control device shall mirror the one illustrated in the various figures described above.

Moreover, when the cover sheath according to the invention is intended to be inserted onto the end portions of the straight or curved handlebars it can have a substantially cylindrical configuration, where the cylinder can be closed or open at the end of the handlebars.

The areas with greater compliance with respect to the remaining part of the sheath itself are also in this case positioned on the sheath in such a way as to be located at the portion of the hand located between thumb and forefinger or at the palm of the hand or even at the length or the ends of the fingers.

In the case of a cover sheath of a lever, for example of a brake lever such as the lever 102, the areas with greater compliance with respect to the remaining part of the sheath itself are positioned on the sheath in such a way as to be located at the fingers when they actuate the brake lever 102.

The "ideal" progression of the material represented in figures 6A, 6B; 7A, 7B; 8A, 8B could actually be made in some areas of a cover sheath according to the invention, for example in areas intended to coat flat portions of grippable bicycle components like for example some portions of control levers.

In the case of a cover sheath of the straight end portions of the handlebars, the material could have outer recesses and inner projections perfectly parallel to each other and to the longitudinal direction of the straight end portions of the handlebars, as well as outer recesses and inner projections extending along circumferences perfectly parallel to each other, according to the perpendicular direction of the sheath. However, directions sloped with respect to those described above can also be made.

Moreover, although the outer recesses and inner projections described above have been shown as formed directly in a single piece of material to make a one-piece sheath, the areas with increased compliance described above can be made in pieces of material separate from the rest of the sheath and applied as inserts in openings of the rest of the sheath.

The connection of the inserts to the sheath can be made for example through shape fitting or by co-moulding.

## Claims

1. Cover sheath (1; 21; 31; 41) for a grippable bicycle component (100) comprising, in at least one area thereof and on an inner side thereof, a plurality of inner recesses (40) defining a plurality of inner projections (41-43), and in said at least one area and on an outer side thereof, a plurality of outer recesses (7; 17, 18; 27-29; 37), wherein said plurality of inner projections (41-43) comprises a first plurality of inner projections (41) extending according to spaced and non-intersecting curvilinear directions **characterised in that** said plurality of inner projections (41-43) further comprises a second plurality of inner projections (42, 43) extending according to spaced and non-intersecting curvilinear directions, the curvilinear directions of the second plurality of projections (42, 43) intersecting with the curvilinear directions of the first plurality of projections (41).

2. Cover sheath (1; 21; 31; 41) according to claim 1, wherein each outer recess (7; 17, 18; 27-29; 37) is at an inner projection (41-43).

3. Cover sheath (1; 21; 31; 41) according to any of claims 1-2, wherein said curvilinear directions of the first plurality of projections (41) are substantially parallel to each other.

4. Cover sheath (1; 21; 31; 41) according to any of claims 1-3, wherein said curvilinear directions of the first plurality of projections (41) follow a corresponding curvature of the bicycle component (100).

5. Cover sheath (1; 21; 31; 41) according to any of claims 1-4, wherein said curvilinear directions of the second plurality of projections (42, 43) are substantially parallel to each other.

6. Cover sheath (1; 21; 31; 41) according to any of claims 1-5, wherein said curvilinear directions of the second plurality of projections (42, 43) follow a corresponding curvature of the bicycle component (100).

7. Cover sheath (1; 21; 31; 41) according to any of claims 1-6, wherein said curvilinear directions of the second plurality of projections (42, 43) are substantially perpendicular to the curvilinear directions of the first plurality of projections (41).

8. Cover sheath (41) according to any of the previous claims, wherein said plurality of outer recesses (37) comprises a plurality of substantially spherical-capshaped notches (37).

9. Cover sheath (41) according to claim 8, wherein said notches (37) are arranged in a substantially regular two-dimensional array.

10. Cover sheath (41) according to any of claims 8-9, wherein said plurality of inner projections (41-43) comprises a first (41) plurality of projections (41) extending according to spaced and non-intersecting curvilinear directions, and a second plurality of projections (42, 43) extending according to spaced and non-intersecting curvilinear directions, the curvilinear directions of the second plurality of projections (42, 43) intersecting with the curvilinear directions of the first plurality of projections (41), each notch (37) being at an intersection between a projection (41) of the first plurality of projections and a projection (42, 43) of the second plurality of projections.

11. Cover sheath (1; 21; 31) according to any of claims 1-7, wherein said plurality of outer recesses (7; 17, 18; 27-29) comprises a first plurality of grooves (7; 17; 27) extending according to spaced and non-intersecting curvilinear directions.

12. Cover sheath (1; 21; 31) according to claim 11, wherein said curvilinear directions of the first plurality of grooves (7; 17; 27) are substantially parallel to each other.

13. Cover sheath (1; 21; 31) according to any of claims 11-12, therein said curvilinear directions of the first plurality of grooves (7; 17; 27) follow a corresponding curvature of the bicycle component (100).

14. Cover sheath (21; 31) according to any of claims 11-13 , wherein said plurality of outer recesses (17, 18; 27-29) further comprises a second plurality of grooves (18; 28, 29) extending according to spaced and non-intersecting curvilinear directions, the grooves (18; 28, 29) of the second plurality intersecting with the grooves (17; 27) of the first plurality.

15. Cover sheath (21; 31) according to claim 14, wherein said curvilinear directions of the second plurality of grooves (18; 28, 29) are substantially parallel to each other.

16. Cover sheath (21; 31) according to any of claims 14-15 , wherein said curvilinear directions of the second plurality of grooves (18; 28, 29) follow a corresponding curvature of the bicycle component (100).

17. Cover sheath (21; 31) according to any of claims 14-16, wherein said curvilinear directions of the second plurality of grooves (18; 28, 29) are substantially perpendicular to the curvilinear directions of the first plurality of grooves (17; 27).

18. Cover sheath (1; 11; 21; 31) according to any of the previous claims, wherein said sheath (1; 11; 21; 31) is made of an elastomeric material.

19. Cover sheath (1; 11; 21; 31) according to any of the previous claims, wherein said at least one area extends in a region of the sheath (1; 11; 21; 31) intended to make contact with the cyclist's hand in the gripped condition of the grippable component.

20. Cover sheath (1; 11; 21; 31) according to any of the previous claims, wherein said at least one area extends in a region of the sheath (1; 11; 21; 31) intended to make contact with a region of the cyclist's hand selected from the group consisting of the region defined between the thumb and the forefinger, the palm region, the region of the thumb or of an end thereof, and the region of the fingers other than the thumb or of their ends.

21. Cover sheath (1; 11; 21; 31) according to any of the previous claims, wherein said sheath (1; 11; 21; 31) is a cover sheath of a control device (100) of a brake and/or of a derailleur.

22. Grippable bicycle component (100) equipped with a cover sheath (1; 11; 21; 31) according to any of the previous claims.

23. Component (100) according to claim 24, **characterised by** being a control device (100) of a brake and/or of a derailleur.

## Patentansprüche

1. Schutzhülle (1; 21; 31; 41) für eine greifbare Fahrradkomponente (100), die in wenigstens einem Bereich derselben und an einer Innenseite derselben eine Vielzahl innerer Vertiefungen (40), die eine Vielzahl innerer Vorsprünge (41-43) umgrenzen, und in dem wenigstens einen Bereich und an einer Außenseite derselben eine Vielzahl äußerer Vertiefungen (7; 17, 18; 27-29; 37) umfasst, wobei die Vielzahl innerer Vorsprünge (41-43) eine erste Vielzahl innerer Vorsprünge (41) umfasst, die sich in beabstandeten und einander nicht schneidenden gekrümmten Richtungen erstrecken, **dadurch gekennzeichnet, dass** die Vielzahl innerer Vorsprünge (41-43) des Weiteren eine zweite Vielzahl innerer Vorsprünge (42, 43) umfasst, die sich in beabstandeten und einander nicht schneidenden gekrümmten Richtungen erstrecken, wobei sich die gekrümmten Richtungen der zweiten Vielzahl von Vorsprüngen (42, 43) mit den gekrümmten Richtungen der ersten Vielzahl von Vorsprünge (41) schneiden.

2. Schutzhülle (1; 21; 31; 41) nach Anspruch 1, wobei sich jede äußere Vertiefung (7; 17, 18; 27-29; 37) an einem inneren Vorsprung (41-43) befindet.

3. Schutzhülle (1; 21; 31; 41) nach einem der Ansprüche 1-2, wobei die gekrümmten Richtungen der ersten Vielzahl von Vorsprüngen (41) im Wesentlichen parallel zueinander sind.

4. Schutzhülle (1; 21; 31; 41) nach einem der Ansprüche 1-3, wobei die gekrümmten Richtungen der ersten Vielzahl von Vorsprüngen (41) einer entsprechenden Krümmung der Fahrradkomponente (100) folgen.

5. Schutzhülle (1; 21; 31; 41) nach einem der Ansprüche 1-4, wobei die gekrümmten Richtungen der zweiten Vielzahl von Vorsprüngen (42, 43) im Wesentlichen parallel zueinander sind.

6. Schutzhülle (1; 21; 31; 41) nach einem der Ansprüche 1-5, wobei die gekrümmten Richtungen der zweiten Vielzahl von Vorsprüngen (42, 43) einer entsprechenden Krümmung der Fahrradkomponente (100) folgen.

7. Schutzhülle (1; 21; 31; 41) nach einem der Ansprüche 1-6, wobei die gekrümmten Richtungen der zweiten Vielzahl von Vorsprüngen (42, 43) im Wesentlichen senkrecht zu den gekrümmten Richtungen der ersten Vielzahl von Vorsprüngen (41) sind.

8. Schutzhülle (41) nach einem der vorangehenden Ansprüche, wobei die Vielzahl äußerer Vertiefungen (37) eine Vielzahl im Wesentlichen kugelkappenförmigen Aussparungen (37) umfassen.

9. Schutzhülle (41) nach Anspruch 8, wobei die Aussparungen (37) in einer im Wesentlichen gleichmäßigen zweidimensionalen Gruppe angeordnet sind.

10. Schutzhülle (41) nach einem der Ansprüche 8-9, wobei die Vielzahl innerer Vorsprünge (41-43) eine erste (41) Vielzahl von Vorsprüngen (41), die sich in beabstandeten und einander nicht schneidenden gekrümmten Richtungen erstrecken, sowie eine zweite Vielzahl von Vorsprüngen (42, 43) umfasst, die sich in beabstandeten und einander nicht schneidenden gekrümmten Richtungen erstrecken, sich die gekrümmten Richtungen der zweiten Vielzahl von Vorsprüngen (42, 43) mit den gekrümmten Richtungen der ersten Vielzahl von Vorsprüngen (41) schneiden und sich jede Aussparung (37) an einem Schnittpunkt zwischen einem Vorsprung (41) der ersten Vielzahl von Vorsprüngen und einem Vorsprung (42, 43) der zweiten Vielzahl von Vorsprüngen befindet.

11. Schutzhülle (1; 21; 31) nach einem der Ansprüche 1-7, wobei die Vielzahl äußerer Vertiefungen (7; 17, 18; 27-29;) eine erste Vielzahl von Nuten (7; 17; 27) umfasst, die sich in beabstandeten und einander nicht schneidenden gekrümmten Richtungen erstrecken.

12. Schutzhülle (1; 21; 31) nach Anspruch 11, wobei die gekrümmten Richtungen der ersten Vielzahl von Nuten (7; 17; 27) im Wesentlichen parallel zueinander sind.

13. Schutzhülle (1; 21; 31) nach einem der Ansprüche 11-12, wobei die gekrümmten Rich-tungen der ersten Vielzahl von Nuten (7; 17; 27) einer entsprechenden Krümmung der Fahrradkomponente (100) folgen.

14. Schutzhülle (21; 31) nach einem der Ansprüche 11-13 , wobei die Vielzahl äußerer Vertiefungen (17, 18; 27-29) des Weiteren eine zweite Vielzahl von Nuten (18; 28, 29) umfasst, die sich in beabstandeten und einander nicht schneidenden gekrümmten Richtungen erstrecken, und sich die Nuten (18; 28, 29) der zweiten Vielzahl mit den Nuten (17; 27) der ersten Vielzahl schneiden.

15. Schutzhülle (21; 31) nach Anspruch 14, wobei die gekrümmten Richtungen der zweiten Vielzahl von Nuten (18; 28, 29) im Wesentlichen parallel zueinander sind.

16. Schutzhülle (21; 31) nach einem der Ansprüche 14-15, wobei die gekrümmten Richtungen der zweiten Vielzahl von Nuten (18; 28, 29) einer entsprechenden Krümmung der Fahrradkomponente (100) folgen.

17. Schutzhülle (21; 31) nach einem der Ansprüche 14-16, wobei die gekrümmten Richtungen der zweiten Vielzahl von Nuten (18; 28, 29) im Wesentlichen senkrecht zu den gekrümmten Richtungen der ersten Vielzahl von Nuten (17; 27) sind.

18. Schutzhülle (1; 11; 21; 31) nach einem der vorangehenden Ansprüche, wobei die Hülle (1; 11; 21; 31) aus einem Elastomermaterial besteht.

19. Schutzhülle (1; 11; 21; 31) nach einem der vorangehenden Ansprüche, wobei sich der wenigstens eine Bereich in einem Abschnitt der Hülle (1; 11; 21; 31) erstreckt, der im ergriffenen Zustand der greifbaren Komponente in Kontakt mit der Hand des Radfahrers kommen soll.

20. Schutzhülle (1; 11; 21; 31) nach einem der vorangehenden Ansprüche, wobei sich der wenigstens eine Bereich in einem Abschnitt der Hülle (1; 11; 21; 31) erstreckt, der mit einem Abschnitt der Hand des Radfahrers in Kontakt kommen soll, der aus der Gruppe ausgewählt wird, die aus dem Abschnitt, der von dem Daumen und dem Zeigefinger umgrenzt wird, dem Handflächenabschnitt, dem Abschnitt des Daumens oder eines Endes derselben und dem Abschnitt der Finger außerhalb des Daumens oder ihren Enden besteht.

21. Schutzhülle (1; 11; 21; 31) nach einem der vorangehenden Ansprüche, wobei die Hülle (1; 11; 21; 31) eine Schutzhülle einer Bedienvorrichtung (100) einer Bremse und/oder einer Gangschaltung ist.

22. Greifbare Fahrradkomponente (100), die mit einer Schutzhülle (1; 11; 21; 31) nach einem der vorangehenden Ansprüche versehen ist.

23. Komponente (100) nach Anspruch 24, **dadurch gekennzeichnet, dass** sie eine Bedienvorrichtung (100) einer Bremse und/oder einer Gangschaltung ist.

## Revendications

1. Gaine de protection (1 ; 21 ; 31 ; 41) destinée à un composant de bicyclette antidérapant (100) comprenant, dans au moins une zone de celle-ci et sur un côté interne de celle-ci, une pluralité d'évidements internes (40) définissant une pluralité de protubérances internes (41-43), et dans ladite au moins une zone et sur un côté externe de celle-ci, une pluralité d'évidements externes (7 ; 17, 18 ; 27-29 ; 37), dans laquelle ladite pluralité de protubérances internes (41-43) comprend une première pluralité de protubérances internes (41) s'étendant selon des directions curvilignes espacées et ne se croisant pas, **caractérisée en ce que** ladite pluralité de protubérances internes (41-43) comprend en outre une deuxième pluralité de protubérances internes (42, 43) s'étendant selon des directions curvilignes espacées et ne se croisant pas, les directions curvilignes de la deuxième pluralité de protubérances (42, 43) croisant les directions curvilignes de la première pluralité de protubérances (41).

2. Gaine de protection (1 ; 21 ; 31 ; 41) selon la revendication 1, dans laquelle chaque évidement externe (7 ; 17, 18 ; 27-29 ; 37) se trouve au niveau d'une protubérance interne (41-43).

3. Gaine de protection (1 ; 21 ; 31 ; 41) selon l'une quelconque des revendications 1 à 2, dans laquelle lesdites directions curvilignes de la première pluralité de protubérances (41) sont sensiblement parallèles les unes aux autres.

4. Gaine de protection (1 ; 21 ; 31 ; 41) selon l'une quelconque des revendications 1 à 3, dans laquelle lesdites directions curvilignes de la première pluralité de protubérances (41) suivent une courbure correspondante du composant de bicyclette (100).

5. Gaine de protection (1 ; 21 ; 31 ; 41) selon l'une quelconque des revendications 1 à 4, dans laquelle lesdites directions curvilignes de la deuxième pluralité de protubérances (42, 43) sont sensiblement parallèles les unes aux autres.

6. Gaine de protection (1 ; 21 ; 31 ; 41) selon l'une quelconque des revendications 1 à 5, dans laquelle lesdites directions curvilignes de la deuxième pluralité de protubérances (42, 43) suivent une courbure correspondante du composant de bicyclette (100).

7. Gaine de protection (1 ; 21 ; 31 ; 41) selon l'une quelconque des revendications 1 à 6, dans laquelle lesdites directions curvilignes de la deuxième pluralité de protubérances (42, 43) sont sensiblement perpendiculaires aux directions curvilignes de la première pluralité de protubérances (41).

8. Gaine de protection (41) selon l'une quelconque des revendications précédentes, dans laquelle ladite pluralité d'évidements externes (37) comprend une pluralité d'encoches en forme de capuchon sensiblement sphérique (37).

9. Gaine de protection (41) selon la revendication 8, dans laquelle lesdites encoches (37) sont agencées selon un réseau bidimensionnel sensiblement régulier.

10. Gaine de protection (41) selon l'une quelconque des revendications 8 à 9, dans laquelle ladite pluralité de protubérances internes (41-43) comprend une première (41) pluralité de protubérances (41) s'étendant selon des directions curvilignes espacées et ne se croisant pas, et une deuxième pluralité de protubérances (42, 43) s'étendant selon des directions curvilignes espacées et ne se croisant pas, les directions curvilignes de la deuxième pluralité de protubérances (42, 43) croisant les directions curvilignes de la première pluralité de protubérances (41), chaque encoche (37) se situant à une intersection entre une protubérance (41) de la première pluralité de protubérances et une protubérance (42, 43) de la deuxième pluralité de protubérances.

11. Gaine de protection (1 ; 21 ; 31) selon l'une quelconque des revendications 1 à 7, dans laquelle ladite pluralité d'évidements externes (7 ; 17, 18 ; 27-29) comprend une première pluralité de rainures (7 ; 17 ; 27) s'étendant selon des directions curvilignes espacées et ne se croisant pas.

12. Gaine de protection (1 ; 21 ; 31) selon la revendication 11, dans laquelle lesdites directions curvilignes de la première pluralité de rainures (7 ; 17 ; 27) sont sensiblement parallèles les unes aux autres.

13. Gaine de protection (1 ; 21 ; 31) selon l'une quelconque des revendications 11 à 12, dans laquelle lesdites directions curvilignes de la première pluralité de rainures (7 ; 17 ; 27) suivent une courbure correspondante du composant de bicyclette (100).

14. Gaine de protection (21 ; 31) selon l'une quelconque des revendications 11 à 13, dans laquelle ladite pluralité d'évidements externes (17, 18 ; 27-29) comprend en outre une deuxième pluralité de rainures (18 ; 28, 29) s'étendant selon des directions curvilignes espacées et ne se croisant pas, les rainures (18 ; 28, 29) de la deuxième pluralité croisant les rainures (17 ; 27) de la première pluralité.

15. Gaine de protection (21 ; 31) selon la revendication 14, dans laquelle lesdites directions curvilignes de la deuxième pluralité de rainures (18 ; 28, 29) sont sensiblement parallèles les unes aux autres.

16. Gaine de protection (21 ; 31) selon l'une quelconque des revendications 14 à 15, dans laquelle lesdites directions curvilignes de la deuxième pluralité de rainures (18 ; 28, 29) suivent une courbure correspondante du composant de bicyclette (100).

17. Gaine de protection (21 ; 31) selon l'une quelconque des revendications 14 à 16, dans laquelle lesdites directions curvilignes de la deuxième pluralité de rainures (18 ; 28, 29) sont sensiblement perpendiculaires aux directions curvilignes de la première pluralité de rainures (17 ; 27).

18. Gaine de protection (1 ; 11 ; 21 ; 31) selon l'une quelconque des revendications précédentes, où ladite gaine (1 ; 11 ; 21 ; 31) est constituée d'un matériau élastomère.

19. Gaine de protection (1 ; 11 ; 21 ; 31) selon l'une quelconque des revendications précédentes, dans laquelle ladite au moins une zone s'étend dans une région de la gaine (1 ; 11 ; 21 ; 31) destinée à entrer en contact avec la main du cycliste lors de la saisie du composant antidérapant.

20. Gaine de protection (1 ; 11 ; 21 ; 31) selon l'une quelconque des revendications précédentes, dans laquelle ladite au moins une zone s'étend dans une région de la gaine (1 ; 11 ; 21 ; 31) destinée à entrer en contact avec une région de la main du cycliste sélectionnée à partir du groupe constitué de la région définie entre le pouce et l'index, la région de la paume, la région du pouce ou d'une extrémité de celui-ci, et la région des doigts autres que le pouce ou de leurs extrémités.

21. Gaine de protection (1 ; 11 ; 21 ; 31) selon l'une quelconque des revendications précédentes, où ladite gaine (1 ; 11 ; 21 ; 31) est une gaine de protection d'un dispositif de commande (100) d'un frein et/ou d'un dérailleur.

22. Composant de bicyclette antidérapant (100) équipé d'une gaine de protection (1 ; 11 ; 21 ; 31) selon l'une quelconque des revendications précédentes.

23. Composant (100) selon la revendication 22, **caractérisé en ce qu'**il constitue un dispositif de commande (100) d'un frein et/ou d'un dérailleur.
